# EUROPÄISCHE PATENTSCHRIFT

(11) **EP 3 516 191 B1**
(45) Veröffentlichungstag und Bekanntmachung des Hinweises auf die Patenterteilung: **03.06.2026**
(21) Anmeldenummer: 17749442.4
(22) Anmeldetag: 07.08.2017
(51) Int. Cl.: F02D 19/02, F02D 41/00, F02D 41/22, F02D 41/20, F02D 41/14, F02D 41/40

(54) **FUNKTIONSÜBERWACHUNG VON MAGNETVENTILEN FÜR KRAFTSTOFFEINSPRITZSYSTEME**
MONITORING THE FUNCTION OF SOLENOID VALVES FOR FUEL INJECTION SYSTEMS
SURVEILLANCE DU FONCTIONNEMENT D'ÉLECTROVANNES POUR SYSTÈMES D'INJECTION DE CARBURANT

(30) Priorität: 22.09.2016 DE 102016218278
(43) Veröffentlichungstag der Anmeldung: 31.07.2019
(73) Patentinhaber: Robert Bosch GmbH, 70442 Stuttgart (DE)
(72) Erfinder: CHRISTINER, Peter, 4040 Linz (AT); GASSELSDORFER, Claudia, 4040 Linz (AT)
(86) Internationale Anmeldenummer: PCT/EP2017/069938
(87) Internationale Veröffentlichungsnummer: WO 2018/054594

(56) Entgegenhaltungen:
- EP-A1- 2 915 985
- DE-A1- 102005 059 062
- DE-A1- 102008 041 528
- DE-A1- 102013 211 464
- DE-A1- 102014 204 098
- DE-A1- 102015 104 011
- GB-A- 2 534 201
- JP-A- 2012 132 418

## Beschreibung

Die vorliegende Erfindung betrifft den Betrieb von Magnetventilen für Kraftstoffe in Kraftstoffeinspritzsystemen, speziell im Bereich der Großmotoren.

### Stand der Technik

In Einspritzsystemen für Motoren, die mit einem gasförmigen Kraftstoff betrieben werden, wird der Kraftstoff in der Regel mit elektromagnetisch betätigten Gasventilen dosiert. Wird der Elektromagnet bestromt, wird eine Ventiltellergruppe gegen eine von einer oder mehreren Federn ausgeübte Rückstellkraft bewegt und gibt eine oder mehrere Durchflussöffnungen frei. Zum Schließen wird der Strom abgeschaltet. Die Ventiltellergruppe wird dann wieder auf den feststehenden Ventilsitz gedrückt, so dass das Ventil geschlossen wird. Es handelt sich somit um ein sogenanntes "normally closed"-Ventil, das im unbestromten Zustand geschlossen und dabei im Idealfall vollständig dicht ist. Derartige Ventile sind beispielsweise aus der DE 10 2013 212 191 A1 bekannt.

Die Lebensdauer eines solchen Ventils beträgt typischerweise einige hundert Millionen Lastwechsel. Der Hauptgrund für das Lebensdauerende ist eine verschleißbedingte unerwünschte und unkontrollierte Zunahme der eingespritzten Kraftstoffmenge, die durch zwei Effekte bewirkt wird: Der Verschleiß verringert zum Einen den Restluftspalt, so dass sich die Ausschaltzeit verlängert. Zum Anderen vergrößert der Verschleiß den Hub, so dass der Strömungswiderstand des Ventils verringert wird. Ein weiterer Grund für das Lebensdauerende eines Ventils kann Undichtheit zum Saugrohr des Kraftstoffeinspritzsystems sein, die durch den Verschleiß im Bereich der Dichtflächen zwischen Ventilsitz und Ventilteller entsteht.

Aus der DE 10 2014 220 795 A1 ist ein Verfahren zum Betreiben eines Magnetventil-Injektors bekannt, bei dem ein verschleißbedingtes vorzeitiges Schließen aus dem Spannungssignal des Elektromagneten ermittelt und durch Erhöhung des Ansteuerstroms für den Elektromagneten kompensiert wird. Weiter ist aus GB 2 534 201 A ein Verfahren zur Bestimmung der Lebensdauer von Ventileinrichtungen bekannt, wobei ein Zeitparameter der Ventile ermittelt wird und mit einem Grenzwert verglichen wird. Aus der EP 2 915 985 A1 ist ein Verfahren zur elektrischen Überwachung von Gasventilen bekannt, mit dem die Funktionsfähigkeit beurteilt und gegebenenfalls Maßnahmen ergriffen werden können. Die DE 10 2008 041 528 A1 offenbart ein Verfahren zum Ansteuern einer Kraftstoff-Einspritzvorrichtung, wobei elektrische Betriebsgrößen ausgewertet werden zum Erkennen einer möglichen Funktionsstörung. Die DE 10 2013 211 464 A1 zeigt darüber hinaus ein Verfahren zum Betreiben eines Einspritzventils, bei dem überprüft wird, ob eine Fehlfunktion vorliegt. Aus der DE 10 2015 104011 A1 ist ein weiteres Verfahren bekannt, um die Öffnungsdauer eines Magnetventils zu bestimmen und eine Abweichung von einer gewünschten Öffnungsdauer auszugleichen.

### Offenbarung der Erfindung

Im Rahmen der Erfindung wurde ein Verfahren zum Betreiben eines Magnetventils für die Dosierung eines Kraftstoffs in einem Kraftstoffeinspritzsystem entwickelt. Dabei ist das Magnetventil durch einen Elektromagneten gegen eine Rückstellkraft betätigbar. Die einzelnen erfindungsgemäßen Verfahrensschritte werden dabei gemäß den beigefügten Ansprüchen ausgeführt.

Indem eine vollständige Kontrolle über die Öffnungsdauer T_{T} besteht, also insbesondere auch der Öffnungszeitpunkt t_{ON} erfasst wird, kann insbesondere vermieden werden, dass eine zu große Menge an Kraftstoff eindosiert wird. Dies könnte zum Klopfen des Motors führen. Während es bei PKW-Motoren reicht, ein Überschreiten der Klopfgrenze mit einem Klopfsensor zu erkennen und sofort gegenzusteuern, muss gerade bei Großmotoren, wie sie etwa für die Stromerzeugung oder als Haupt- oder Hilfsaggregat auf Schiffen zum Einsatz kommen, jedes Überschreiten der Klopfgrenze unbedingt vermieden werden: Der Großmotor "merkt" sich die mechanische Überbeanspruchung durch jedes Klopfen, und auf Grund seiner im Vergleich zu PKW-Motoren wesentlich längeren Lebensdauer ist die Wahrscheinlichkeit hoch, dass das diesbezügliche Konto irgendwann voll ist und der Motor ohne Vorwarnung ausfällt. Da mit dem Einsatz von Großmotoren in der Regel Geld verdient wird, sind derartige Ausfälle sehr kostspielig und können auch gefährlich werden, wenn etwa ein Schiff nicht mehr manövrierfähig ist. Erfindungsgemäß wird eine Differenz der tatsächlichen Öffnungsdauer T_{T} zum jeweiligen Referenzwert T_{R} durch Änderung des am Elektromagneten angelegten Strom-Zeit-Profils u(t), und/oder des am Elektromagneten angelegten Spannungs-Zeit-Profils i(t), kompensiert, und/oder ausgeregelt. Darüber hinaus werden erfasste Werte der Öffnungsdauer TT archiviert. Aus den archivierten Werten wird eine Abschätzung der verbleibenden Lebensdauer des Magnetventils ausgewertet. Auf diese Weise kann der Anwender beispielsweise die Information erhalten, ob ein Austausch des Magnetventils beim aktuellen Servicetermin notwendig ist oder ob das Magnetventil bis zum nächsten Service am Motor bleiben kann.

Die gemäß der Erfindung getroffenen Maßnahmen machen somit speziell den Betrieb von gasbetriebenen Großmotoren sicherer. Indem der Zustand der Magnetventile engmaschig überwacht wird, ist es nicht mehr notwendig, einen Austausch präventiv nach fixen Betriebsstundenintervallen vorzunehmen. Stattdessen kann die Wartung zustandsabhängig erfolgen, so dass die Kosten für die Wartung selbst und für Ausfallzeiten reduziert werden können.

Alternativ oder in Kombination zur Erfassung über I(t) und/oder U(t) kann die Öffnungszeit T_{T} des Magnetventils auch beispielsweise mit einem Beschleunigungssensor oder Körperschallsensor erfasst werden, der das Anprallen des Ankers in seiner Endposition registriert. Zur Erfassung von I(t) und U(t) kann die bereits vorhandene Sensorik im Motorsteuergerät eingesetzt werden. Es können aber auch zusätzliche Sensoren eingesetzt werden, wie beispielsweise ein Hall-Sensor, mit dem das Magnetfeld des Elektromagneten, und somit I(t), überwacht werden kann. Generell können alle Sensoren und Messprinzipien herangezogen werden, über die man direkt oder indirekt auf den Ventilzustand und/oder das Ventilverhalten schließen kann.

Ist eine verschleißbedingte Änderung der tatsächlichen Öffnungsdauer T_{T} erst einmal erkannt, so kann sie durch eine Änderung der Ansteuerung des Magnetventils in gewissen Grenzen kompensiert werden. Das Ventil verhält sich dann annähernd wie ein neues Ventil und kann entsprechend länger genutzt werden.

In einer besonders vorteilhaften Ausgestaltung der Erfindung wird aus dem Zeitverlauf I(t), und/oder U(t), zusätzlich ein Verschleißgrad W des Magnetventilsausgewertet. Die Erfinder haben erkannt, dass jeder Verschleiß, der den Massenstrom dm/dt in relevantem Umfang beeinflusst, auch die Ankerbewegung des Magnetventils beeinflusst. Der Einfluss auf die Ankerbewegung erzeugt wiederum charakteristische Strom- und Spannungssignale im Magnetkreis, die gemessen werden können.

Besonders vorteilhaft wird der zu dem Zeitverlauf I(t), und/oder U(t), korrespondierende Verschleißgrad W aus einer Eichdatenbank abgerufen. Eine solche Eichdatenbank, die beispielsweise eine Wertetabelle oder ein Kennfeld sein kann, kann beispielsweise vorab anhand eines oder mehrerer Test-Ventile des gleichen Typs im Rahmen eines Verschleißtests auf einem Prüfstand ermittelt werden. Dieser Verschleißtest kann insbesondere ein Rafftest sein. Im Rahmen dieses Tests kann beispielsweise periodisch der Verschleiß W gemessen werden, und es kann erfasst werden, inwieweit sich I(t) und U(t) beim Öffnen und/oder beim Schließen vom Neuzustand des Ventils entfernt haben.

In einer besonders vorteilhaften Ausgestaltung der Erfindung dosiert das Magnetventil den Kraftstoff in ein Saugrohr des Kraftstoffeinspritzsystems.

Die Auswertung sowie die Kompensation und das Ausregeln von verschleißbedingten Abweichungen können vom bestehenden Motorsteuergerät, aber auch mit zusätzlicher Elektronik, wahrgenommen werden.

Die Erfindung bezieht sich auch auf ein Steuergerät zur Durchführung eines Verfahrens gemäß einem der beigefügten Ansprüche 1 oder 3. Erfindungsgemäß umfasst das Steuergerät eine Eichdatenbank, die einem Zeitverlauf I(t) des durch den Elektromagneten fließenden Stroms I, und/oder einem Zeitverlauf U(t) der am Elektromagneten anliegenden Spannung U, einen Verschleißgrad W des Magnetventils zuordnet.

Weiterhin bezieht sich die Erfindung auch auf ein Kraftstoffeinspritzsystem mit mindestens einem Saugrohr und mindestens einem Magnetventil zur Dosierung von Kraftstoff in das Saugrohr. Erfindungsgemäß ist im oder am Saugrohr stromabwärts des Magnetventils eine Messeinrichtung für die Schallgeschwindigkeit c im Saugrohr angeordnet. Diese Messeinrichtung umfasst nach dem zuvor Gesagten mindestens einen Schwingungserzeuger.

Da sich das Verfahren aller bereits am Motor und/oder im Steuergerät vorhandenen Sensoren bedienen kann, kann es zu einem großen Teil oder gar vollständig durch eine softwaretechnische Änderung der Abläufe im Steuergerät realisiert werden. Eine solche Software ist ein eigenständig verkaufbares Produkt. Die Erfindung bezieht sich daher auch auf ein Computerprogrammprodukt mit maschinenlesbaren Anweisungen, die, wenn sie auf einem Computer, und/oder auf einem Steuergerät, ausgeführt werden, den Computer, und/oder das Steuergerät, dazu veranlassen, ein Verfahren gemäß der Erfindung auszuführen, und/oder zu einem Steuergerät gemäß der Erfindung aufwerten.

Weiterhin stellt auch die zur Ermittlung des Verschleißes verwendbare Eichdatenbank ein Produkt dar, das zusammen mit der Software zur Durchführung des Verfahrens oder auch eigenständig verkauft werden kann. Die Erfindung bezieht sich daher auch auf ein Computerprogrammprodukt mit einer Eichdatenbank für ein Magnetventil, welches durch einen Elektromagneten gegen eine Rückstellkraft betätigbar ist. Die Eichdatenbank ordnet einem Zeitverlauf I(t) des durch den Elektromagneten fließenden Stroms I, und/oder einem Zeitverlauf U(t) der am Elektromagneten anliegenden Spannung U, einen Verschleißgrad W des Magnetventils zu.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 gemäß der Erfindung;
Figur 2 Ausführungsbeispiel des Kraftstoffeinspritzsystems 3 gemäß der Erfindung;
Figur 3 beispielhafte Zeitverläufe u(t) der Spannung am Elektromagneten 11, I(t) der Stromantwort des Elektromagneten 11 und h(t) des Hubes des Magnetventils 1.

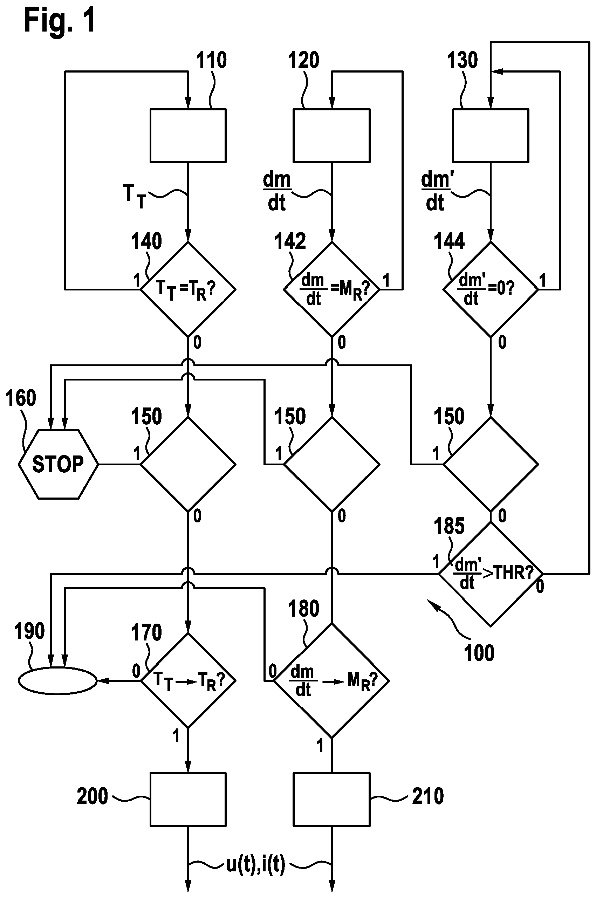

Nach Figur 1 werden in den parallelen Schritten 110, 120 und/oder 130 die tatsächliche Öffnungsdauer T_{T}, der Massenstrom dm/dt und/oder die Leckage dm'/dt des Magnetventils 1 ermittelt. In den Schritten 140, 142 bzw. 144 wird jeweils geprüft, ob T_{T} dem Referenzwert T_{R} entspricht, ob dm/dt dem Referenzwert M_{R} entspricht, bzw. ob die Leckage dm'/dt=0 ist. Wenn dies der Fall ist (Wahrheitswert 1), wird zur jeweiligen Messung 110, 120 bzw. 130 zurückverzweigt.

Liegt hingegen eine Abweichung vor (Wahrheitswert 0), so wird im für alle drei Größen T_{T}, dm/dt und dm'/dt gleichen Schritt 150 zunächst geprüft, ob eine schwere Fehlfunktion vorliegt.

Bei einer schweren Fehlfunktion (Wahrheitswert 1) so wird in Schritt 160 ein Notstopp des Motors veranlasst. Andernfalls (Wahrheitswert 0) wird in den Schritten 170 und 180 geprüft, ob die Öffnungszeit T_{T} sich durch eine Änderung der Ansteuerung des Magnetventils 1 kompensieren oder ausregeln lässt. Ist dies möglich (Wahrheitswert 1), werden in den Schritten 200 und 210 die geeigneten Maßnahmen ergriffen; das Magnetventil 1 wird mit dem passenden Spannungssignal u(t), und/oder dem passenden Stromsignal i(t), angesteuert. Eine wesentliche Stellschraube ist hier die Bestromungsdauer des Elektromagneten 11. Ist eine Kompensation oder ein Ausregeln nicht möglich (Wahrheitswert 0), wird der Anwender in Schritt 190 darüber informiert, dass eine Wartung Not tut.

Eine Leckage dm'/dt kann grundsätzlich nicht durch eine geänderte Ansteuerung des Magnetventils 1 ausgeglichen werden. Daher wird eine eventuelle Leckage, die keine schwere Fehlfunktion darstellt, lediglich daraufhin überprüft, ob sie größer ist als ein vorgegebener Schwellwert T_{HR}. Ist dies der Fall (Wahrheitswert 1), wird der Anwender in Schritt 190 über die fällige Wartung informiert. Wird der Schwellwert T_{HR} hingegen nicht überschritten (Wahrheitswert 0), wird zurück zur Ermittlung der Leckage in Schritt 130 verzweigt.

Statt der Größen T_{T}, dm/dt und dm'/dt können auch die jeweiligen Rohdaten, aus denen diese Größen ermittelt wurden, also beispielsweise Kenngrößen der Zeitverläufe I(t) und U(t), direkt mit entsprechenden Referenzwerten verglichen werden.

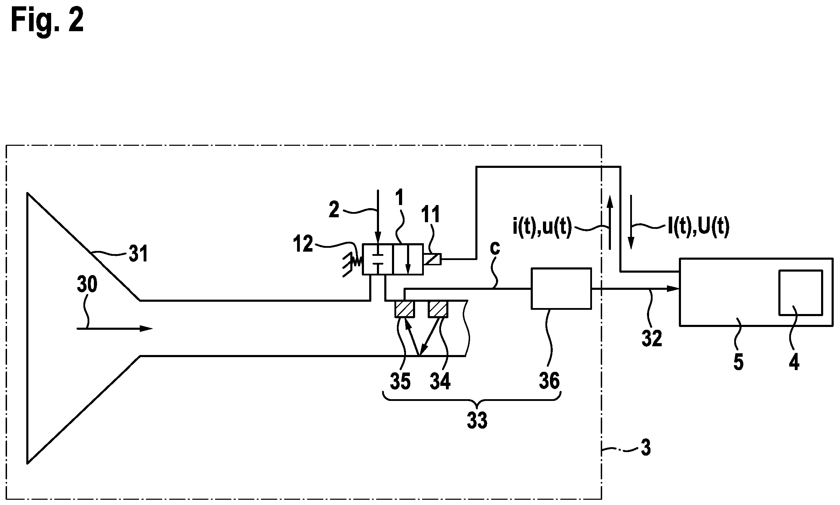

Figur 2 zeigt schematisch ein Ausführungsbeispiel eines Einspritzsystems 3 für Kraftstoff 2 gemäß der Erfindung. Über das Saugrohr 31 wird Luft 30 angesaugt. Um die Luft 30 mit Kraftstoff 2 zu durchmischen, wird der Kraftstoff 2 durch das Magnetventil 1 eindosiert. Das Magnetventil 1 ist über einen Elektromagneten 11 gegen eine Rückstellkraft, die von einer Ventilfeder 12 ausgeübt wird, betätigbar.

Das Steuergerät 5 beaufschlagt den Elektromagneten 11 mit einer Spannung, die einem Zeitprogramm u(t) folgt, und/oder mit einem Strom, der einem Zeitprogramm i(t) folgt. Zugleich misst das Steuergerät den Zeitverlauf U(t) der tatsächlich am Elektromagneten 11 anliegenden Spannung U, und/oder den Zeitverlauf I(t) des tatsächlich durch den Elektromagneten 11 fließenden Stroms I. Das Steuergerät 5 enthält eine Eichdatenbank 4, aus der es den zu dem Zeitverlauf I(t), und/oder U(t), korrespondieren Verschleißgrad W des Magnetventils 1 abruft.

Um die Leckage dm'/dt des Magnetventils 1 im geschlossenen Zustand zu messen, wird stromabwärts der Stelle, an der das Magnetventil 1 den Kraftstoff 2 in das Saugrohr 31 eindosiert, die Gaszusammensetzung 32 im Saugrohr 31 gemessen. Dazu sind im Saugrohr 31 ein Sender 34 und ein Empfänger 35 für Ultraschall angeordnet. Aus der Phasenverschiebung zwischen der abgestrahlten und der empfangenen Ultraschallwelle lässt sich die Schallgeschwindigkeit c im Saugrohr 31 ermitteln. Die Auswerteeinheit 36, die zusammen mit dem Sender 34 und dem Empfänger 35 die Messeinrichtung 33 bildet, bestimmt aus der Schallgeschwindigkeit c die gesuchte Gaszusammensetzung 32. Das Steuergerät 5 ermittelt hieraus wiederum die gesuchte Leckage dm'/dt.

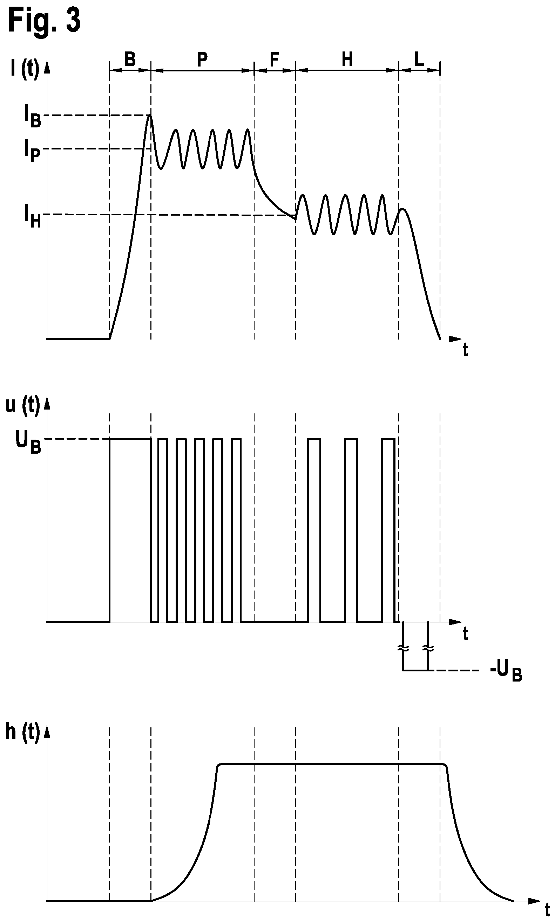

Figur 3 zeigt beispielhaft die Zeitverläufe u(t) der am Elektromagneten 11 angelegten Spannung, I(t) des hierdurch durch den Elektromagneten 11 getriebenen Stroms und h(t) des Hubes des Magnetventils 1 während eines Einspritzzyklus.

Um das Magnetventil 1 zu öffnen, wird in einer Boost-Phase B zunächst eine hohe Boost-Spannung U_{B} angelegt, so dass der Strom I schnell auf den Boost-Strom I_{B} ansteigt. Anschließend wird in einer Pull-In-Phase P die Spannung in Form eines Rechtecksignals zwischen Null und U_{B} moduliert, so dass der Strom I um einen Zeitmittelwert I_{P} schwankt. In der Pull-In-Phase P öffnet sich das Magnetventil 1; der Hub h(t) nimmt schnell zu und erreicht schließlich sein maximales Niveau.

Zu einem Zeitpunkt, zu dem das Magnetventil 1 vollständig geöffnet ist, wird der Elektromagnet 11 kurz in eine Freilaufphase F geschaltet, in der keine Spannung an ihm angelegt wird. Der Strom I klingt in dieser Phase ab bis auf ein Haltestromniveau I_{H}.

Um das Magnetventil 1 geöffnet zu halten, wird in der Haltephase H die am Elektromagneten 11 angelegte Spannung u(t) wiederum zwischen Null und U_{B} moduliert, aber mit einem verminderten Verhältnis zwischen Einschaltdauer und Ausschaltdauer. Dementsprechend schwankt der Strom I(t) nunmehr um den geringeren zeitlichen Mittelwert I_{H}.

Um am Ende des Einspritzzyklus das Magnetventil 1 zu schließen, wird in der Löschphase L ein Lösch-Spannungspuls mit umgekehrter Polarität an den Elektromagneten 11 angelegt. Dadurch wird die Energie im Magnetkreis des Magnetventils 1 schnell abgebaut. Dies wiederum hat zur Folge, dass die Rückstellkraft der Ventilfeder 12 die Oberhand gewinnt und der Hub h(t) des Magnetventils 1 sich vermindert, bis das Magnetventil 1 schließlich vollständig geschlossen ist.

## Patentansprüche

1. Verfahren (100) zum Betreiben eines Magnetventils (1) für die Dosierung eines Kraftstoffs (2) in einem Kraftstoffeinspritzsystem (3), wobei das Magnetventil durch einen Elektromagneten (11) gegen eine Rückstellkraft (12) betätigbar ist, **dadurch gekennzeichnet, dass**
bei mindestens einer Öffnung des Magnetventils (1) der Zeitverlauf I(t) des durch den Elektromagneten (11) fließenden Stroms I, und/oder der Zeitverlauf U(t) der am Elektromagneten (11) anliegenden Spannung U, erfasst und aus dem Zeitverlauf I(t), und/oder U(t), der Öffnungszeitpunkt t_{ON} und der Schließzeitpunkt t_{OFF} des Magnetventils (1) ausgewertet werden (110) und die tatsächliche Öffnungsdauer T_{T}=t_{OFF}-t_{ON} des Magnetventils (1) mit einem Referenzwert T_{R} verglichen wird (140) und eine Differenz der tatsächlichen Öffnungsdauer T_{T}, zum Referenzwert T_{R} durch Änderung des am Elektromagneten (11) angelegten Strom-Zeit-Profils I(t), und/oder des am Elektromagneten (11) angelegten Spannungs-Zeit-Profils U(t), kompensiert und/oder ausgeregelt wird (200, 210), wobei erfasste Werte der Öffnungsdauer T_{T} archiviert werden und aus den archivierten Werten eine Abschätzung der verbleibenden Lebensdauer des Magnetventils (1) ausgewertet wird.

2. Verfahren (100) nach Anspruch 1, **dadurch gekennzeichnet, dass** aus dem Zeitverlauf I(t) und/oder U(t) zusätzlich ein Verschleißgrad W des Magnetventils (1) ausgewertet wird.

3. Verfahren (100) nach Anspruch 2, **dadurch gekennzeichnet, dass** der zu dem Zeitverlauf I(t) und/oder U(t) korrespondierende Verschleißgrad W aus einer Eichdatenbank (4) abgerufen wird.

4. Steuergerät (5) zur Durchführung eines Verfahrens nach Anspruch 1 oder 3, **dadurch gekennzeichnet, dass** das Steuergerät eine Eichdatenbank (4) umfasst, die einem Zeitverlauf I(t) des durch den Elektromagneten (11) fließenden Stroms I, und/oder einem Zeitverlauf U(t) der am Elektromagneten (11) anliegenden Spannung U, einen Verschleißgrad W des Magnetventils (1) zuordnet.

5. Computerprogrammprodukt, enthaltend maschinenlesbare Anweisungen, die, wenn sie auf einem Steuergerät (5) nach Anspruch 4 ausgeführt werden, das Steuergerät (5) dazu veranlassen, ein Verfahren nach einem der Ansprüche 1 bis 3 auszuführen.

## Claims

1. Method (100) for operating a solenoid valve (1) for metering a fuel (2) in a fuel injection system (3), wherein the solenoid valve is able to be actuated counter to a return force (12) by an electromagnet (11),
**characterized in that**
upon at least one opening of the solenoid valve (1), the temporal profile I(t) of the current I flowing through the electromagnet (11) and/or the temporal profile U(t) of the voltage U applied to the electromagnet (11) are/is recorded, and, from the temporal profile I(t) and/or U(t), the opening time t_{ON} and the closure time t_{OFF} of the solenoid valve (1) are evaluated (110), and the actual opening duration T_{T}=t_{OFF}-t_{ON} of the solenoid valve (1) is compared (140) with a reference value T_{R}, and a difference between the actual opening duration T_{T} and the reference value T_{R} is compensated for and/or corrected (200, 210) by changing the current temporal profile I(t) applied to the electromagnet (11) and/or the voltage temporal profile U(t) applied to the electromagnet (11), wherein recorded values of the opening duration T_{T} are archived and an estimation of the remaining lifetime of the solenoid valve (1) is evaluated from the archived values.

2. Method (100) according to Claim 1, **characterized in that** a degree of wear W of the solenoid valve (1) is additionally evaluated from the temporal profile I(t) and/or U(t).

3. Method (100) according to Claim 2, **characterized in that** the degree of wear W corresponding to the temporal profile I(t) and/or U(t) is retrieved from a calibration database (4).

4. Controller (5) for carrying out a method according to Claim 1 or 3, **characterized in that** the controller comprises a calibration database (4) that assigns a degree of wear W of the solenoid valve (1) to a temporal profile I(t) of the current I flowing through the electromagnet (11) and/or to a temporal profile U(t) of the voltage U applied to the electromagnet (11).

5. Computer program product containing machine-readable instructions that, when they are executed on a controller (5) according to Claim 4, cause the controller (5) to execute a method according to one of Claims 1 to 3.

## Revendications

1. Procédé (100) destiné à faire fonctionner une électrovanne (1) pour doser un carburant (2) dans un système d'injection de carburant (3), l'électrovanne pouvant être actionnée par un électroaimant (11) à l'encontre d'une force de rappel (12),
**caractérisé en ce que**
dans le cas d'au moins une ouverture de l'électrovanne (1), la variation temporelle I(t) du courant I traversant l'électroaimant (11) et/ou la variation temporelle U(t) de la tension U appliquée sur l'électroaimant (11) sont détectées et le moment d'ouverture t_{ON} et le moment de fermeture t_{OFF} de l'électrovanne (1) sont évalués (110) à partir de la variation temporelle I(t) et/ou U(t), et la durée d'ouverture réelle T_{T}=t_{OFF}-t_{ON} de l'électrovanne (1) est comparée (140) à une valeur de référence T_{R} et une différence entre la durée d'ouverture réelle T_{T} et la valeur de référence T_{R} est compensée et/ou régulée (200, 210) en modifiant le profil courant-temps I(t) appliqué sur l'électroaimant (11) et/ou le profil tension-temps U(t) appliqué sur l'électroaimant (11), des valeurs détectées de la durée d'ouverture T_{T} étant archivées et une estimation de la durée de vie restante de l'électrovanne (1) étant évaluée à partir des valeurs archivées.

2. Procédé (100) selon la revendication 1, **caractérisé en ce qu'**un degré d'usure W de l'électrovanne (1) est évalué en supplément à partir de la variation temporelle I(t) et/ou U(t).

3. Procédé (100) selon la revendication 2, **caractérisé en ce que** le degré d'usure W correspondant à la variation temporelle I(t) et/ou U(t) est extrait d'une base de données d'étalonnage (4).

4. Appareil de commande (5) pour la mise en œuvre d'un procédé selon la revendication 1 ou 3, **caractérisé en ce que** l'appareil de commande comprend une base de données d'étalonnage (4), qui attribue un degré d'usure W de l'électrovanne (1) à une variation temporelle I(t) du courant 1 traversant l'électroaimant (11) et/ou à une variation temporelle U(t) de la tension U appliquée sur l'électroaimant (11).

5. Produit de programme informatique contenant des instructions lisibles par machine qui, lorsqu'elles sont exécutées sur un appareil de commande (5) selon la revendication 4, amènent l'appareil de commande (5) à exécuter un procédé selon l'une des revendications 1 à 3.
